# EUROPEAN PATENT APPLICATION

(11) **EP 4 789 542 A1**
(43) Date of publication of application: **12.08.2026**
(21) Application number: 24873933.6
(22) Date of filing: 02.10.2024
(51) Int. Cl.: A01N 59/00, A01N 25/22

(54) **BIOCIDAL COMPOSITION, KIT, PROCESS FOR PRODUCING THE COMPOSITION, USE OF THE COMPOSITION, MANUFACTURING AND PACKAGING PROCESS AND PACKAGED PRODUCT**

(30) Priority: 03.10.2023 BR 102023020379
(71) Applicant: Principium Vitae LLC, Dover, DE 19901 (US)
(72) Inventor: AZZI PACHECO BORBA, Flávio, 04520-000 São Paulo - SP (BR)
(74) Representative: Lavoix
(86) International application number: PCT/BR2024/050449
(87) International publication number: WO 2025/073028

(57) **Abstract**

The present invention relates to a biocidal composition with high oxidizing power comprising chlorine dioxide, silicon dioxide and carbonates nanoparticles. The present invention also relates to a kit comprising a reagent (component A) comprising an organomineral compound reactive with hydrogen salts, hydroxy salts, and hydrated salt; a stabilizer (component B) comprising an acid complex with polynuclear coordination compounds, with two electron pairs and trisodium citrate; and a cationic catalyst (component C) comprising a kinetic activated complex of chlorine dioxide in a colloidal solution of silicon dioxide. The present invention is also directed to the production process of the composition, the packaged product, and the use of the composition or the kit for oxidation and/or disinfection. The mixture of components A, B, and C forms the Poly Chlorine Silicon Oxide (POCS) biocidal composition used as an oxidant/disinfectant.

## Description

### FIELD OF INVENTION

The present invention relates to a biocidal composition with high oxidizing power comprising chlorine dioxide (ClO₂), silicon dioxide nanoparticles (SiO₂), and a stabilizer. The present invention also relates to a kit comprising a reagent (component A) comprising an organomineral compound reactive with hydrogen salts, hydroxy salts, and hydrated salt; a stabilizer (component B) comprising an acid complex with polynuclear coordination compounds, with two electron pairs and trisodium citrate; and a cationic catalyst (component C) comprising a kinetic activated complex of chlorine dioxide in a colloidal solution of silicon dioxide. The present invention is also directed to the production process of the composition, the packaged product, and the use of the composition or the kit for oxidation and/or disinfection. The mixture of components A, B, and C forms the Poly Chlorine Silicon Oxide (POCS) biocidal composition used as an oxidant/disinfectant.

### BACKGROUND OF THE INVENTION

Numerous compositions for the treatment of water, effluents and bad odors are known in the state of the art, which usually comprise mixtures of chlorinated products, peroxides, benzalkonium chlorides, acids and salts.

Many of the biocides currently used rely heavily on the compounds mentioned above, elements that can generate harmful impacts on the environment and human health, such as the formation of chlorinated organic compounds. Consequently, with pressure from government policies, new environmentally friendly disinfectant alternatives are needed to improve the elimination characteristics of microorganisms and increase the quality and effectiveness of the desired treatments.

Conventional physical-chemical treatment systems that use chlorine gas derivatives, hypochlorites, and synthetic polymers do not contain materials capable of oxidizing and disinfecting without satisfactorily and safely forming chlorinated substrates, this leads in the long term, and in most applications, to a decrease in the quality of drinking water and wastewater discharged into water sources, as well as adverse chemical reactions resulting in the formation of residues containing contaminants such as aluminum, iron, chromium, and ammoniacal nitrogen, and a loss of dissolved oxygen (DO) retention properties in the treated water or effluent.

In this sense, any modification to the oxidation potential of effective disinfection agents is highly desirable, with a wide range in the effective pH range (0-14), which positively impacts the safe and efficient use of the treatment system as a whole, with a significant decrease in the formation of organochlorine compounds (THMs - Trihalomethanes), such as chloroform, which can cause harmful effects to human health, since they are potentially carcinogenic substances.

It is equally desirable that biocidal products have the ability to oxidize and enrich the water and effluents of the applied systems with dissolved oxygen (DO), in order to neutralize pathogens and increase the speed and capacity of the treatment of such system, generating benefits such as reduced contact time for disinfection (reduction and/or elimination of coliforms and thermotolerant bacteria), elimination of the release of bad odors into the environment, improvement of apparent color, reduction of oxygen demands (BOD - Biochemical Oxygen Demand and COD - Chemical Oxygen Demand), oxidation of metals such as iron and manganese, oxidation of phenols, sulfide and cyanide, reduction of haloacetic acids (HAAs), turbidity control with the removal of particulate matter, reduction in the consumption of other commonly used inputs and improvement in performance indices when compared with conventional products currently used in the treatment of water and effluents in general.

Therefore, according to the information above, it is noted that the current state of the art still seeks ideal compositions for oxidation/disinfection use, whose mixtures of specific components are capable of safely promoting, and accurately indicating in their dilutions (mg/L), a reduction in undesirable reactions resulting from chlorination, and that perform significant oxidation and disinfection on the microbiological parameters of systems under various configurations.

Surprisingly, the inventor of the present invention has developed liquid component compositions comprising up to three components or raw materials that solve the problems of the prior art mentioned above.

The selection of specific components in these compositions contained in components A, B, and C involves several technical factors, aligned to optimize the effect of the solution on water and effluent treatment and odor elimination, in addition to its high capacity for delivering and combining dissolved oxygen (DO), which is fundamental for the remediation of contaminated water sources without causing negative environmental impact.

Specifically, the present invention discloses that the compositions of these components, based on silicon dioxide nanotechnology in high concentrations and grouping the three active components (reagent - A, stabilizer - B and catalyst - C) to form the final composition, the Poly Chlorine Silicon Oxide (POCS) product, aim to enrich the concentration and association of dissolved oxygen (DO), to provide absolute disinfection of the applied water body, by a chemical reaction of oxygen with the organic load to be degraded, and maintain an ideal amount of residual chlorine, without presenting undesirable reactions resulting from chlorination, with safety, stability and increased operational reliability of the implemented treatment system.

Furthermore, the ratio between the components of the present invention is not easily derived from the state of the art. In particular, the high weight concentration of the reagent (compound A), relative to the total weight of the composition, departs from what is commonly used, since this component is usually used in small proportions, i.e., in much lower concentrations and percentages.

Furthermore, the high concentration of the inputs used and the need for post-reaction hydration of the components (A + B + C), on demand, optimizes production capacity and also reduces the volume of product to be transported, thus reducing energy or fuel consumption in distribution logistics.

### SUMMARY OF THE INVENTION.

The present invention relates to a biocidal composition with high oxidizing power comprising chlorine dioxide, silicon dioxide nanoparticles, and a stabilizer. The present invention also relates to a kit comprising a reagent (component A) comprising an organomineral compound reactive with hydrogen salts, hydroxy salts, and hydrated salt; a stabilizer (component B) comprising an acid complex with polynuclear coordination compounds, with two electron pairs and trisodium citrate; and a cationic catalyst (component C) comprising a kinetic activated complex of chlorine dioxide in a colloidal solution of silicon dioxide. The present invention is also directed to the production process of the composition, the packaged product, and the use of the composition or the kit for oxidation and/or disinfection. The mixture of components A, B, and C forms the Poly Chlorine Silicon Oxide (POCS) biocidal composition used as an oxidant/disinfectant.

### BRIEF DESCRIPTION OF THE FIGURES

Figure 1 depicts a comparative evaluation of trihalomethane (THM) generation between chlorine dioxide generated from Poly Chlorine Silicon Oxide (POCS) versus chlorine generated from sodium hypochlorite.
Figure 2 depicts the evaluation of organochlorine and haloacetic acid (THM and HAA) generation by pre-oxidation and disinfection with chlorine generated from sodium hypochlorite and Poly Chlorine Silicon Oxide (POCS) using a jar test essay performed with raw water collected from the Pinheiros River - São Paulo.
Figure 3 compares the disinfectant action of Poly Chlorine Silicon Oxide and Chlorine (Sodium Hypochlorite) on effluents from wastewater treatment systems at the State University of Campinas - UNICAMP.
Figure 4 shows the demand test for evaluating Standard Reduction Potential (SRP) of Poly Chlorine Silicon Oxide.

### DETAILED DESCRIPTION OF THE INVENTION

In a first aspect, the present invention relates to a biocidal composition of Poly Chlorine Silicon Oxide (POCS), comprising:
a) chlorine dioxide;
b) silicon dioxide nanoparticles; and
c) stabilizer.

The chlorine dioxide in the POCS composition is contained in a colloidal solution of nanoparticulate silicon dioxide. In a preferred embodiment, the silicon dioxide nanoparticles exhibit only positive polarity.

The POCS composition also comprises a stabilizer. In a preferred embodiment, the stabilizer comprises, but is not limited to, carbonates. More preferably, the stabilizer comprises calcium bicarbonate, sodium carbonate, or a mixture thereof. In a preferred embodiment, the stabilizer comprises, but is not limited to, citrates. More preferably, the stabilizer comprises sodium citrate. In another preferred embodiment, the stabilizer comprises a mixture of carbonates and citrates.

In a preferred embodiment, the composition of POCS is obtained by mixing:
- a reagent (component A) comprising an organomineral compound reactive with hydrogen salts, hydroxy salts and a hydrated salt;
- a stabilizer (component B) comprising an acid complex with polynuclear coordination compounds, with two electron pairs and trisodium citrate; and
- cationic catalyst (component C) comprising a kinetic activated complex of chlorine dioxide in a colloidal solution of silicon dioxide.

Component A comprises an organomineral compound reactive with hydrogen salts, hydroxy salts, and hydrated salt. Hydrogen salts or acid salts are salts resulting from the partial neutralization of an acid. Examples of hydrogen salts suitable for the present invention are, but are not limited to: inorganic sodium salts, sodium bisulfate, sodium bicarbonate, hydroxylammonium chloride, ammonium chloride, sodium dihydrogen phosphate, sodium hydrogen phosphate, or a mixture thereof. Hydroxy salts or basic salts are salts resulting from the partial neutralization of a base. Examples of hydroxy salts suitable for the present invention are, but are not limited to: calcium monohydroxynitrate, calcium hydroxide nitrate, dihydroxyaluminum chloride, or a mixture thereof. Hydrated salts are salts in which the ions of the compound incorporate water molecules. Examples of hydrated salts suitable for the present invention are, but are not limited to: calcium chloride dihydrate, copper sulfate, aluminum chloride hexahydrate, or a mixture thereof.

In a preferred embodiment, the organomineral compound reactive with hydrogen salts, hydroxy salts, and hydrated salt comprises, but is not limited to: sodium salts and/or calcium salts. Particularly, component A comprises one or more of sodium chlorite, sodium chloride, sodium chlorate, sodium nitrate, sodium bicarbonate, sodium citrate, sodium monohydroxychloride, sodium monohydrogen chloride, sodium carbonate decahydrate, calcium sulfate, calcium carbonate, and a mixture of two or more thereof. Preferably, component A comprises water. Even more preferably, the salts of component A are in solution.

In a preferred embodiment, the acid complex of component B comprises polynuclear coordination compounds with two electron pairs and trisodium citrate. Preferably, the polynuclear coordination compounds comprise organic acids, inorganic acids, or a mixture thereof. More preferably, suitable organic acids for the present invention are, but are not limited to: citric acid, malic acid, acetic acid, formic acid, lactic acid, tartaric acid, oxalic acid, maleic acid, and succinic acid. More preferably, suitable inorganic acids for the present invention are, but are not limited to: hydrochloric acid, hydrofluoric acid, nitric acid, phosphoric acid, or a mixture thereof.

In a preferred embodiment, the cationic catalyst (component C) comprises a kinetically activated complex of chlorine dioxide in a colloidal silicon dioxide solution, wherein the silicon dioxide is in the form of nanoparticles. In a preferred embodiment, the silicon dioxide nanoparticles exhibit only positive polarity.

In another preferred embodiment, component C also comprises one or more stabilizers. In a preferred embodiment, the stabilizer comprises, but is not limited to, carbonates. More preferably, the stabilizer comprises calcium bicarbonate, sodium carbonate, or a mixture thereof. In a preferred embodiment, the stabilizer comprises, but is not limited to, sodium salts. More preferably, the stabilizer comprises sodium citrate, sodium tripolyphosphate, or a mixture thereof.

In a preferred embodiment of the active ingredient, the main reagent is CAS No. 7758-19-2, and it functions as a reagent.

In another preferred embodiment of the active ingredient, the main stabilizer is CAS No.: 7647-01-0 and has the function of a stabilizer.

In another preferred embodiment, the silicon dioxide nanoparticle is CAS No. 7631-86-9 and functions as a catalyst.

In another preferred embodiment of the active ingredient, the main catalyst is CAS No.: 10049-04-4 and has the function of a catalyst.

In a preferred embodiment, the components of the biocidal composition with high oxidizing power for disinfection and treatment of drinking water, effluents and bad odors, with residual chlorine and dissolved oxygen, have the following ratios:
a) 65 to 75%, by weight, of component A, in relation to the total weight of the composition;
b) 15 to 25%, by weight, of component B, in relation to the total weight of the composition; and
c) 10 to 15%, by weight, of component C, in relation to the total weight of the composition.

In another preferred embodiment, the components of the biocidal composition with high oxidizing power for disinfection and treatment of drinking water, effluents and bad odors, with residual chlorine and dissolved oxygen, have the following ratios:
a) 65 to 75%, by weight, of component A, in relation to the total weight of the composition;
b) 15 to 25%, by weight, of component B, in relation to the total weight of the composition;
c) 10 to 15%, by weight, of component C, in relation to the total weight of the composition; and
d) 1 to 2% by weight of at least one silicon dioxide nanoparticle, relative to the total weight of the composition.

In one embodiment of the invention, the silicon dioxide nanoparticles have a particle size ranging from 1 to 100 nm. In a preferred embodiment of the invention, the silicon dioxide nanoparticles have a particle size ranging from 1 to 20 nm.

In another preferred embodiment, the amount of nanoparticles is up to 5% by weight or volume, relative to the total weight of the POCS composition.

The present invention also applies to a kit comprising:
- a reagent (component A) comprising an organomineral compound reactive with hydrogen salts, hydroxy salts and a hydrated salt;
- a stabilizer (component B) comprising an acid complex with polynuclear coordination compounds, with two electron pairs and trisodium citrate; and
- cationic catalyst (component C) comprising a kinetic activated complex of chlorine dioxide in a colloidal solution of silicon dioxide.

Component A comprises an organomineral compound reactive with hydrogen salts, hydroxy salts, and hydrated salt. Hydrogen salts or acid salts are salts resulting from the partial neutralization of an acid. Examples of hydrogen salts suitable for the present invention are, but are not limited to: inorganic sodium salts, sodium bisulfate, sodium bicarbonate, hydroxylammonium chloride, ammonium chloride, sodium dihydrogen phosphate, sodium hydrogen phosphate, or a mixture thereof. Hydroxy salts or basic salts are salts resulting from the partial neutralization of a base. Examples of hydroxy salts suitable for the present invention are, but are not limited to: calcium monohydroxynitrate, calcium hydroxide nitrate, dihydroxyaluminum chloride, or a mixture thereof. Hydrated salts are salts in which the ions of the compound incorporate water molecules. Examples of hydrated salts suitable for the present invention are, but are not limited to: calcium chloride dihydrate, copper sulfate, aluminum chloride hexahydrate, or a mixture thereof.

In a preferred embodiment, the organomineral compound reactive with hydrogen salts, hydroxy salts, and hydrated salt comprises, but is not limited to, sodium salts and/or calcium salts. Particularly, component A comprises one or more of sodium chlorite, sodium chloride, sodium chlorate, sodium nitrate, sodium bicarbonate, sodium citrate, sodium monohydroxychloride, sodium hydrogen chloride, sodium carbonate decahydrate, calcium sulfate, calcium carbonate, and a mixture of two or more thereof. Preferably, component A comprises water. Even more preferably, the salts of component A are in solution.

In a preferred embodiment, the acid complex of component B comprises polynuclear coordination compounds with two electron pairs and trisodium citrate. Preferably, the polynuclear coordination compounds comprise organic acids, inorganic acids, or a mixture thereof. More preferably, suitable organic acids for the present invention are, but are not limited to: citric acid, malic acid, acetic acid, formic acid, lactic acid, tartaric acid, oxalic acid, maleic acid, and succinic acid. More preferably, suitable inorganic acids for the present invention are, but are not limited to: hydrochloric acid, hydrofluoric acid, nitric acid, phosphoric acid, or a mixture thereof.

In a preferred embodiment, the cationic catalyst (component C) comprises a kinetically activated complex of chlorine dioxide in a colloidal solution of silicon dioxide, wherein the silicon dioxide is in the form of nanoparticles. In a preferred embodiment, the silicon dioxide nanoparticles exhibit only positive polarity.

In another preferred embodiment, component C also comprises one or more stabilizers. In a preferred embodiment, the stabilizer comprises, but is not limited to, carbonates. More preferably, the stabilizer comprises calcium bicarbonate, sodium carbonate, or a mixture thereof. In a preferred embodiment, the stabilizer comprises, but is not limited to, sodium salts. More preferably, the stabilizer comprises sodium citrate, sodium tripolyphosphate, or a mixture thereof.

In a preferred embodiment, the kit also comprises instructions for use that indicate to the user the most appropriate ways of carrying out the procedure according to its purpose.

The components present in the Poly Chlorine Silicon Oxide (POCS) are capable of combating microbiological loads, especially bacteria, by the penetration and oxidation of their fatty acids and lipids, destroying the permeability of their outer membrane; this reaction results in the inability of the cell to control the movement of molecules and deneutralizes cellular proteins within the membranes, oxidizing the amino acids that compose these proteins. Thus, the proteins lose their physical properties and functionality, causing the cells to lose their ability to generate energy, and in this way, they become unable to stay alive.

In its action against viruses, the Poly Chlorine Silicon Oxide (POCS) penetrates the protein capsid and reacts directly with the RNA of the virus, expelling it. When the RNA is expelled from the virus, all RNA synthesis is deactivated, thus preventing the virus from multiplying via biomolecular reactions, resulting in the death of the virus due to loss of resistance.

In its action against fungi, the Poly Chlorine Silicon Oxide (POCS) has the ability to penetrate the rigid walls of fungal cells, composed of chitin layers, and disinfects the affected surface. It also inhibits the asexual reproduction of fungi, blocking the sporulation process, which consists of the release of spores that germinate to form new hyphae and mycelia. It is also effective in preventing and combating fungal infections in food.

Unlike conventional oxidants, Poly Chlorine Silicon Oxide (POCS) does not form any type of AOC (Assimilable Organic Carbon), which are nutrients for bacteria, and thus controls and degrades biofilms, which are communities of bacteria that do not develop resistance to the action of the present invention.

Since the Poly Chlorine Silicon Oxide (POCS) composition of the present invention comprises a blend of components, its oxidizing power plays an important role in enriching the dissolved oxygen (DO) of the medium to be applied, with a low oxidation potential (0.95 v) and better oxidation capacity (2.6 times greater than other conventional oxidants).

Furthermore, the oxidation potential of effective disinfection agents such as Poly Chlorine Silicon Oxide (POCS) has a wide range in the effective pH range (0-14), significantly more efficient indices than known compositions in the prior art, which do not have high oxidative capacity at different pH levels in acidic and alkaline media.

The present invention has a strong sustainable (GREEN) appeal, since with the degradation of the organic load by its composition and with the enrichment of dissolved oxygen (DO) in the aquatic environment, in addition to the benefits reported above, with a shorter contact period compared to known compositions of the prior art, it does not form organochlorines of any origin, which in turn generates great benefits in the quality of the required treatments and provides a discharge of treated effluents in accordance with current environmental standards.

Furthermore, the electronic organization of Poly Chlorine Silicon Oxide (POCS) consists of an oxidant with 5 electrons, and provides an oxidation capacity 2.6 times greater than that of known compositions in the prior art. The ion organization provided by the Poly Chlorine Silicon Oxide (POCS) composition allows chlorine dioxide to be delivered with greater durability and stability when compared to (i) other products that provide gaseous chlorine dioxide, which is unstable, (ii) other products that provide gaseous chlorine dioxide in the form of compressed gas, which is difficult to produce due to its explosive properties, or (iii) other products that provide gaseous chlorine dioxide in the form of common liquid solutions, given its volatility.

The present invention also relates to a process for producing the composition, comprising blending components A, B, and C. The blending of components A, B, and C to obtain the POCS composition can be carried out in any environment. In a preferred embodiment, the blending is carried out in a controlled environment. In a more preferred embodiment, the controlled environment is an induction statically stabilized environment. In a further preferred embodiment, the blending is carried out in an induction statically stabilized environment with induced electron charge.

In a more preferred embodiment, the incorporation of components A, B, and C of the blend to form the Poly Chlorine Silicon Oxide (POCS) composition is carried out in equipment provided with ultrasound technology and static induction stabilization of the outer envelope, in order to organize the association in the blend of the three-component composition (A + B + C), which stores the biocidal composition, as defined above.

In a preferred embodiment, the process comprises, prior to blending, a weighing step of components A, B, and C.

In another preferred embodiment, the process further comprises packaging the composition. Preferably, the packaging is done in a statically stabilized container. Even more preferably, the packaging is done in a statically stabilized container with only positive polarity.

The biocidal composition of Poly Chlorine Silicon Oxide (POCS), with high oxidizing power for disinfection and treatment of drinking water, effluents, and bad odors, with disposal of residual chlorine and dissolved oxygen, can be packaged via liquid transfer in a pumping system, using a stainless steel vacuum pump and suction compressors, weighing and packaging of the composition with induced static control of the environment, for arrangement of ambient polarity of protons and electrons in the components. In a particularly preferred embodiment, the biocidal composition of Poly Chlorine Silicon Oxide (POCS) is mixed using a continuous stainless steel colloidal mill and packaged together with the nanoparticles, allowing its easy application in different treatment systems and solutions, as mentioned above. Other component blending techniques are known in the art and suitable for the present invention.

In a preferred embodiment, the process comprises, prior to blending, a processing and nanoparticle size reduction step of the raw material of composition C. Preferably, the processing and nanoparticle size reduction step of the raw material takes place in a statically stabilized environment, with only positive polarity.

In a preferred embodiment, the processing involves combining chlorine dioxide gas in an aqueous medium via a Venturi valve and/or via a chlorine dioxide gas abatement tower in water with upward flow.

In a preferred embodiment, nanoparticle formation corresponds to the process of transforming the raw material of component C into nanoparticles. Nanoparticles are defined as objects with a size variation on the order of 1 to 100 nm (nanometers). Preferably, the nanoparticles used herein refer to metal oxide nanoparticles, even more preferably, silicon dioxide. As well established in the state of the art, there are several ways to produce metal oxide nanoparticles, involving mechanical, thermal and/or chemical processes and through different methods, based on the aggregation of molecules (bottom up) or on the removal of material (top-down) to obtain the desired structure. Several routes for the synthesis of nanoparticles are known to those skilled in the art, and they will be able to identify the techniques suitable for the present invention for generating silicon dioxide nanoparticles, preferably those with only a positive charge. Among the known techniques that may be suitable for the present invention are, but are not limited to, sol-gel, protein sol-gel, fluidized bed reactor, etc.

The present invention is also directed to the packaged product, characterized by comprising a stabilized outer casing, so as to organize the ambient polarity of the ions of the packaging that stores the POCS composition, as defined above.

The present invention also relates to the use of the composition or kit, as defined above, in disinfection and/or oxidation processes. In a preferred embodiment, the POCS composition or kit can be used in disinfection and oxidation processes. In particular, the oxidation and disinfection processes can be used in, but are not limited to, sewage treatment, effluent treatment, drinking water treatment, wastewater treatment, waste treatment, treatment of odor release into the environment, treatment of skin diseases, regeneration of water sources, surface disinfection, sanitization of fresh produce, sanitization of air conditioning systems, environmental sanitization, hand sanitization, and animal health in general.

### TERMS

The term "biocidal", as used herein, refers to a substance that prevents, neutralizes, inhibits, or exterminates the action of unwanted microorganisms, exerting control over them.

The term "oxidizing power", as used herein, refers to the ability of a species to undergo reduction and, therefore, to oxidize another.

The term "cationic catalyst", as used herein, refers to a positively charged catalyst. Catalysts, as commonly known, increase the rate of a reaction without being consumed in the reaction itself.

The term "kinetic activated complex", as used herein, refers to the intermediate state (transition state) formed between the reactants and products of the complex.

The term "organochlorine", as used herein, refers to compounds that have at least one chlorine atom bonded to a carbon chain.

The term "haloacetic acid", as used herein, refers to carboxylic acids substituted with electron-withdrawing groups.

The term "colloidal solution", as used herein, refers to mixtures that have the appearance of a solution or a homogeneous mixture, but, in fact, are heterogeneous mixtures, comprising particles with dimensions in the range of 1 to 1,000 nanometers (nm).

The term "statically stabilized", as used herein, refers to an object that has only one magnetic polarity; this object can be a (nanoparticle), molecule, environment, etc. When referring to a nanoparticle, it is understood that it only binds to its opposite polarity.

The term "oxidation" as used in the present invention corresponds to the common definition in the art, being defined as the chemical reaction between an organic compound and an oxidant, in which there is a loss of electrons in atoms, ions, and molecules.

The term "disinfection", as used herein, refers to the removal or elimination of microorganisms present in their vegetative (non-spore-forming) forms.

The term "sanitization", as used herein, refers to the set of steps in a procedure aimed at reducing, and even eliminating, microorganisms to levels considered safe by regulatory agencies. Sanitization can be performed in any desired environment, including surfaces and equipment, or even solutions such as drinking water, effluents, wastewater, etc. The term "hygiene", as used herein, can encompass both cleaning and sanitization steps.

In line with the term above, the term "animal health" refers to the set of practices aimed at the health and well-being of animals, such as disease prevention and treatment, routine planning, and environmental adaptation.

The term "dissolved oxygen" or DO, as used herein, refers to a relative measure of the amount of oxygen that is dissolved in or transported by a given fluid. DO is a limiting factor for the maintenance of aquatic life and self-purification processes in natural aquatic systems and wastewater treatment plants.

The term "Biochemical Oxygen Demand" or BOD, as used herein, refers to the amount of oxygen required to stabilize organic matter degraded by the action of bacteria, under controlled aerobic conditions, where the lower the BOD, the cleaner the water.

The term "Chemical Oxygen Demand" or COD, as used herein, refers to the amount of dissolved oxygen required for the degradation of organic matter by means of a chemical agent, usually in an acidic medium.

### EXAMPLES

The examples presented herein are merely illustrative and should not be used to limit the present invention. Analysis of pH, residual chlorine, turbidity, BOD, COD, and microorganisms are common to the routine of a person skilled in the art, who is fully capable of selecting and applying known methodologies for measuring such parameters. The same can be indicated on the ideal methods and equipment through current technical standards and guidelines (for example, Brazilian Association of Technical Standards - ABNT, CONAMA Resolutions, Standard Methods for the Examination of Water and Wastewater (SMEWW) etc. Among the equipment commonly suitable for the analysis in question are pH meter, chlorine meter, turbidimeter, etc.

### EXAMPLE 1

### ASSESSMENT OF FREE RESIDUAL CHLORINE GENERATION CAPACITY

Tests were conducted to determine the residual chlorine production capacity after dosing with Poly Chlorine Silicon Oxide in post-filtered water from the Guandu River - Rio de Janeiro.

Post-filtration water samples were collected and different concentrations of Poly Chlorine Silicon Oxide (POCS) were measured, in addition to a hyperchlorinated solution prepared from calcium hypochlorite tablets (control). The post-filtered sample was characterized with a pH of 6.1, turbidity of 1.3 NTU, and chlorine demand of 0.4 ppm. The data on free residual chlorine generation capacity are consolidated in Table 1 below. The pH, residual chlorine, and turbidity measurements were performed using laboratory equipment and measurement methods common to the art and compared between the POCS result and the hyperchlorinated solution. The pH measurement allows verification of the presence or absence of interference in the action of the coagulating agent (aluminum sulfate).

**TABLE 1**

| **Sample** | **Free Residual Chlorine (mg/L)** | **pH** | **Turbidity (NTU)** |
|---|---|---|---|
| 0.5 ppm of POCS | 0.5 | 6.1 | 1.1 |
| 1.0 ppm of POCS | 1.0 | 6.1 | 1.1 |
| 1.5 ppm of POCS | 1.5 | 6.1 | 1.1 |
| 1.0 ppm of hyperchlorinated solution | 0.6 | 5.7 | 1.2 |
| 1.5 ppm of hyperchlorinated solution | 1.1 | 5.6 | 1.2 |
| 2.0 ppm of hyperchlorinated solution | 1.4 | 5.6 | 1.2 |

As can be observed, the Poly Chlorine Silicon Oxide (POCS) composition of the present invention has an improved (more efficient) capacity for generating free residual chlorine when compared to a hyperchlorinated solution, and the product did not reduce the pH of the post-filtered water when compared to the dosage with a hypochlorite solution, indicating that the action of POCS did not result in any detrimental interference with the coagulant action. Regarding turbidity, good performance was also observed with the use of POCS.

### EXAMPLE 2

### EVALUATION OF TRIHALOMETHANE (THM) GENERATION

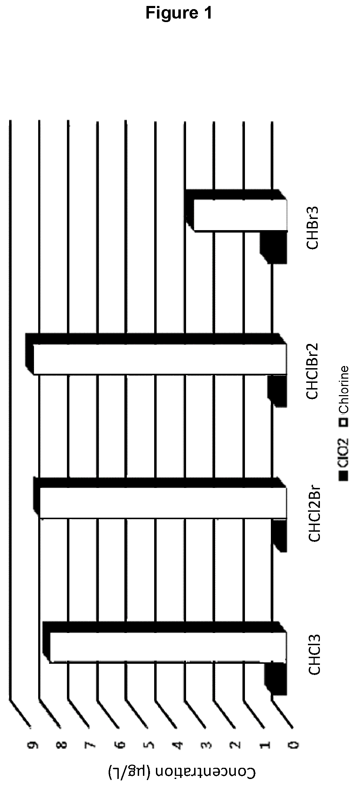

Tests were conducted by the USEPA (United States Environmental Protection Agency) to evaluate the generation of trihalomethanes (THMs), in accordance with the standards and parameters established by the agency for urban effluent, through equivalent dosages of chlorine (Sodium Hypochlorite) and chlorine dioxide (Poly Chlorine Silicon Oxide - POCS). The Brazilian regulation established by CONAMA (National Council for the Environment) regarding the maximum THM content in drinking water (also used for wastewater, since wastewater is constantly discharged into water sources) allows the presence of up to 100 ppb of THMs in wastewater. Comparative data are consolidated in Figure 1.

The reduction in THM formation from chlorine dioxide generated from Poly Chlorine Silicon Oxide (POCS) (<1 µg/L) compared to chlorine generated from sodium hypochlorite (between 3 µg/L and 9 µg/L) is noteworthy.

### EXAMPLE 3

### EVALUATION OF THM AND HAA GENERATION

The generation of organochlorines and haloacetic acids (THMs and HAAs) was evaluated using a jar test assay common to the art, with raw water collected from the Pinheiros River - São Paulo - SP.

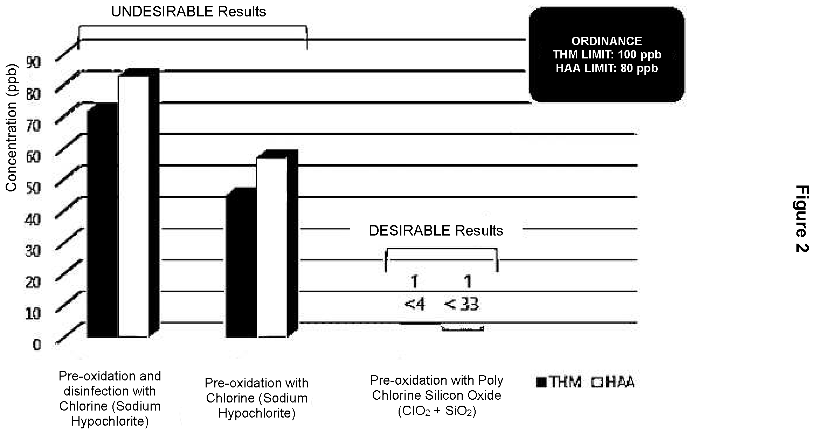

The samples were analyzed by the laboratory Controle Analítico - Análises Técnicas Ltda. The limit allows the presence of up to 100 ppb of THMs and up to 80 ppb of HAA. Comparative data on pre-oxidation and disinfection with chlorine generated from sodium hypochlorite and comparative data on pre-oxidation and disinfection with Poly Chlorine Silicon Oxide (POCS) are consolidated in Figure 2.

As observed, the THM and HAA levels generated by POCS are desirable results, that is, well below the limits established by regulatory ordinances, with minimal generation of organochlorines and acids harmful to human health and the environment.

### EXAMPLE 4

### EVALUATION OF DISINFECTANT ACTION

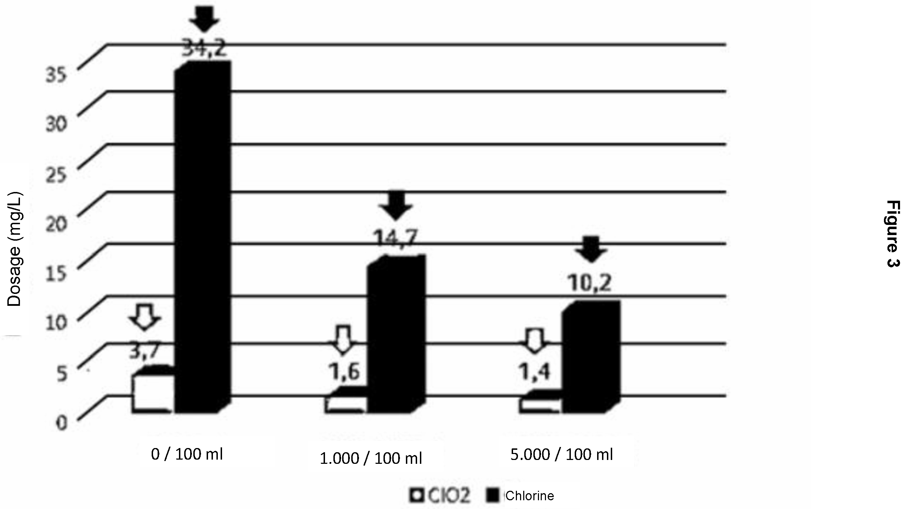

The comparison of the disinfectant action of chlorine dioxide (Poly Chlorine Silicon Oxide) and chlorine (Sodium Hypochlorite) was carried out on effluents from wastewater treatment systems at UNICAMP. The comparative data are consolidated in Figure 3.

As can be observed, POCS requires a lower dosage for disinfection and a shorter contact time when compared to chlorine. Consequently, the product of the present invention requires a smaller contact tank volume than the volume required by chlorine.

### EXAMPLE 5

### EVALUATION OF OXIDATION POTENTIAL

In order to evaluate the Standard Reduction Potential (SRP), that is, the spontaneity or tendency of a chemical species to acquire electrons and thus be reduced, the oxidation potential and oxidation capacity of Poly Chlorine Silicon Oxide were generated and compared to other known oxidants used for water treatment.

As shown in Table 2 below, when compared to other oxidants for water treatment, Poly Chlorine Silicon Oxide (ClO₂ + SiO₂) has a low oxidation potential, with the best oxidation capacity.

**TABLE 2**

| **Oxidizing agent** | **Oxidation potential (v)** | **Oxidation capacity** |
|---|---|---|
| Ozone | 2.07 (strong) | 2 |
| Hydrogen peroxide | 1.78 | 2 |
| Hypochlorite acid | 1.49 | 2 |
| Hypobromous acid | 1.33 | 2 |
| ***Chlorine dioxide (POCS)*** | ***0.95*** | ***5*** |
| Hypochlorite | 0.9 | 2 |
| Hypobromite | 0.7 (weak) | 2 |

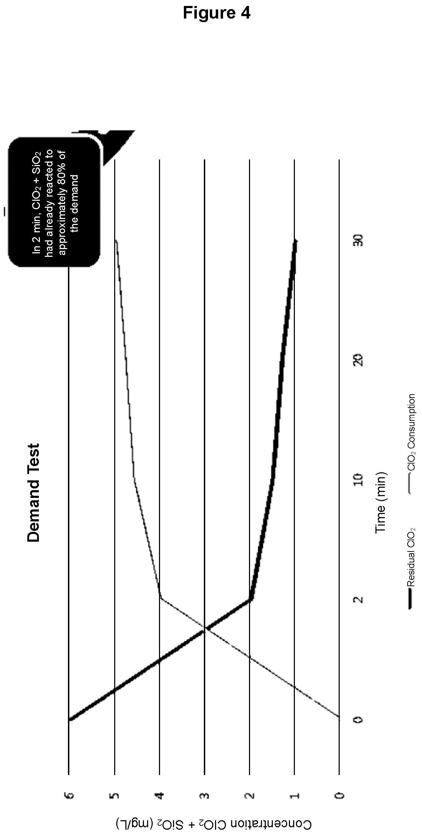

Furthermore, in Figure 4, it can be observed that in 2 minutes, the Poly Chlorine Silicon Oxide (ClO₂ + SiO₂) had already reacted to approximately 80% of the demand.

### EXAMPLE 6

### EVALUATION OF THE WATER TREATMENT OF THE PINHEIROS RIVER - SÃO PAULO

The evaluation of raw effluent treatment was carried out using raw water collected from the Pinheiros River - São Paulo - SP. The analysis were performed by the Controle Analitico laboratory for the following parameters: total BOD, total COD, DO (mg/L), pH (pH units), turbidity (NTU), and biological contamination (fecal coliforms, total coliforms, and heterotrophic bacteria in MPN/100 mL and CFU/mL - wherein MPN stands for Most Probable Number and CFU stands for Colony Forming Unit), according to the current ABNT standards and Standard Methods for the Examination of Water and Wastewater (SMEWW).

Table 3 below shows the values found in the raw effluent (i.e., taken from the Pinheiros River for treatment) and effluent treated with a solution of Poly Chlorine Silicon Oxide (POCS) at a production concentration of 10,000 ppm. A percentage of 6% (six percent) of POCS was applied to 1,000 (one thousand) liters of raw effluent.

**TABLE 3**

| **Parameter** | **Raw Effluent** | **Treated effluent (6% POCS) 24 hours after application** | **Treated effluent (6% POCS) 28 days after collection** |
|---|---|---|---|
| pH | 7.15 UpH | 3.66 UpH | 3.66 UpH |
| **BOD** | **38 mg/L** | **6 mg/L** | **3 mg/L** |
| **COD** | **136 mg/L** | **27 mg/L** | **8 mg/L** |
| **DO** | **2.3 mg/L** | **16.1 mg/L** | **8 mg/L** |
| **Turbidity** | **37 NTU** | **26 NTU** | **2 NTU** |
| Temperature | 18.8 °C | 20 °C | 20 °C |
| **Fecal coliforms** | **2.3 x 10⁶ MPN/100 mL** | **<1.8 MPN/100 mL** | **<1.8 MPN/100 mL** |
| **Total coliforms** | **3.3 x 10⁷ MPN/100 mL** | **<1.8 MPN/100 mL** | **<1.8 MPN/100 mL** |
| **Heterotrophic bacteria** | **>5,700 CFU/ mL** | **<1.0 CFU/ mL** | **<1.0 CFU/ mL** |

### EXAMPLE 7

### EVALUATION OF WATER TREATMENT IN THE BARIGUI, BELÉM, AND PASSAÚNA RIVERS - CURITIBA

The evaluation of raw effluent treatment was carried out using raw water collected from the Barigui River, Belém, and Passaúna River - Curitiba, Paraná. The raw effluents were treated with a treatment agent, Poly Chlorine Silicon Oxide, at a production concentration of 10,000 ppm in percentage amounts of 2%, 6%, and 10%. The analysis were performed according to current standards. Tables 4, 5, and 6 below show the values found in the raw and treated effluents.

**TABLE 4 - EFFLUENT FROM THE BARIGUI RIVER**

| **Collection date** | **Parameter** | **Raw Effluent** | **Treated effluent (2% POCS)** | **Treated effluent (6% POCS)** | **Treated effluent (10% POCS)** |
|---|---|---|---|---|---|
| 31/08/2021 | Temperature (°C) | 18.1 | - | - | - |
| | Fecal coliforms (MPN/100 mL) | **92,000** | <1.8 | <1.8 | <1.8 |
| | *E. coli* (MPN/100 mL) | **7,000** | <1.8 | <1.8 | <1.8 |
| | *Enterococcus spp.* (MPN/100 mL) | **>23** | Absent in 50 mL | Absent in 50 mL | Absent in 50 mL |
| | *P. aeruginosa* (MPN/ 100 mL) | **9.2** | Absent in 50 mL | Absent in 50 mL | Absent in 50 mL |
| | Sulfite-reducing clostridia (MPN/100 mL) | **>23** | Absent in 50 mL | Absent in 50 mL | Absent in 50 mL |
| 16/09/2021 | Temperature (°C) | 16 | - | - | Tests not performed |
| | BOD (mg/L) | **16** | 8 | 5 | |
| | COD (mgO₂/L) | **78** | 28 | <25 | |
| | Total oils and greases (mg/L) | <10 | <10 | <10 | |
| | pH | 7.5 | 7.1 | 6.4 | |
| | Total solids (103-105 °C) (mg/L) | 89.5 | 93.5 | 110.5 | |
| | DO (mgO₂/L) | 4.2 | 6.2 | 6.3 | |
| | Turbidity (UT) | 41 | 29 | 29 | |

**TABLE 5 - EFFLUENT FROM THE BELÉM RIVER**

| **Collection date** | **Parameter** | **Raw Effluent** | **Treated effluent (2% POCS)** | **Treated effluent POCS)** | **Treated effluent (10% POCS)** |
|---|---|---|---|---|---|
| 31/08/2021 | Temperature (°C) | 17.5 | - | - | - |
| | Fecal coliforms (MPN/100 mL) | **540,000** | <1.8 | <1.8 | <1.8 |
| | *E. coli* (MPN/100 mL) | **9,300** | <1.8 | <1.8 | <1.8 |
| | *Enterococcus spp.* (MPN/100 mL) | **>23** | Absent in 50 mL | Absent in 50 mL | Absent in 50 mL |
| | *P. aeruginosa* (MPN/100 mL) | **23** | Absent in 50 mL | Absent in 50 mL | Absent in 50 mL |
| | Sulfite-reducing clostridia (MPN/100 mL) | **>23** | Absent in 50 mL | Absent in 50 mL | Absent in 50 mL |
| 16/09/2021 | Temperature (°C) | 16.3 | - | - | Tests not performed |
| | BOD (mg/L) | **12** | 9 | 5 | |
| | COD (mgO₂/L) | **40** | 27 | <25 | |
| | Total oils and greases (mg/L) | <10 | <10 | <10 | |
| | pH | 7.5 | 7.2 | 6.4 | |
| | Total solids (103-105 °C) (mg/L) | 73 | 81 | 99.5 | |
| | DO (mgO₂/L) | 3.3 | 6.3 | 6.3 | |
| | Turbidity (UT) | 10 | 8.8 | 7.7 | |

**TABLE 6 - PASSAÚNA RIVER EFFLUENT**

| **Collection date** | **Parameter** | **Raw Effluent** | **Treated effluent (2% POCS)** | **Treated effluent (6% POCS)** | **Treated effluent (10% POCS)** |
|---|---|---|---|---|---|
| 31/08/2021 | Temperature (°C) | 18.3 | - | - | - |
| | Fecal coliforms (MPN/100 mL) | **920** | <1.8 | <1.8 | <1.8 |
| | *E. coli* (MPN/100 mL) | **22** | <1.8 | <1.8 | <1.8 |
| | *Enterococcus spp.* (MPN/100 mL) | **90** | Absent in 50 mL | Absent in 50 mL | Absent in 50 mL |
| | *P. aeruginosa* (MPN/100 mL) | **<1.1** | Absent in 50 mL | Absent in 50 mL | Absent in 50 mL |
| | Sulfite-reducing clostridia (MPN/100 mL) | **<23** | Absent in 50 mL | Absent in 50 mL | Absent in 50 mL |
| 16/09/2021 | Temperature (°C) | 17.5 | - | - | Tests not performed |
| | BOD (mg/L) | **13** | 8 | 4 | |
| | COD (mgO₂/L) | **25** | <25 | <25 | |
| | Total oils and greases (mg/L) | <10 | <10 | <10 | |
| | pH | 7.8 | 7.4 | 7.2 | |
| | Total solids (103-105 °C) (mg/L) | 56 | 57 | 72.5 | |
| | Turbidity (UT) | 15 | 12 | 11 | |

### EXAMPLE 8

### EVALUATION OF THE WATER TREATMENT OF THE CANAL DAS TACHAS - RIO DE JANEIRO

The Canal das Tachas connects important ecological systems such as Lagoinha, located in the Chico Mendes Municipal Natural Park, and Lagoa de Marapendi, located in the Marapendi Municipal Natural Park, and corresponds to an important and valuable water body in the municipality of Rio de Janeiro, which is in a critical situation in terms of water quality.

The evaluation of raw effluent treatment was carried out using raw water collected from the Canal das Tachas. The raw effluent was treated with a treatment agent, Poly Chlorine Silicon Oxide, at a production concentration of 10,000 ppm in a percentage quantity of 6%. The analysis were performed in accordance with current standards. Table 7 below shows the values found in the raw and treated effluents.

**TABLE 7**

| **Parameter** | **Raw Effluent** | **Treated effluent (6% POCS)** | **Standard (CONAMA Resolution)** |
|---|---|---|---|
| pH | 7.4 | 6.1 | 6 to 9 |
| TOC - Total organic carbon (mg/L) | 16,400 | 20,100 | - |
| True color (uC) | **507** | 400 | 75 |
| BOD (mgO₂/L) | **34** | <1 | 5 |
| DO (mg/L) | 0.30 | 8.90 | >5 |
| Temperature (°C) | 23.9 | 22.6 | - |
| *E. coli* (MPN/100 mL) | **>160,000,000** | <1.8 | 1,000 |
| Heterotrophic bacteria (CFU/ mL) | **370,000** | <1 | 400 |
| Thermotolerant coliforms (MPN/100 mL) | **>160,000,000** | <1.8 | 1,000 |
| Total coliforms (MPN/100 | **>160,000,000** | <1.8 | 1,000 |

According to the results obtained, significant improvements in water quality were observed after the application of POCS, through positive variations in several parameters. Notable improvements include a reduction in thermotolerant coliforms, the ability to maintain dissolved oxygen (DO) in the water, and a reduction in color and BOD parameters.

### EXAMPLE 9

### EVALUATION OF LEACHATE TREATMENT

The leachate sample was divided into two parts: one that preserved its condition as supplied, i.e., without the addition of any type of product, called raw leachate; and the other, which received the application of POCS (Poly Chlorine Silicon Oxide), called treated leachate. Both samples were sent to an accredited laboratory for analysis and technical reports on the parameters observed in the current standard CONAMA 430/2011 Art. 16 - Effluent. Table 8 below shows the values found in the raw and treated leachate.

**TABLE 7**

| **Parameter** | **Raw Leachate** | **Treated Leachate (POCS)** |
|---|---|---|
| Vegetable oils and animal fat (mg/L) | 38.3 | 5.9 |
| Total phenols (mg/L) | 13.2 | 0.13 |
| Total BOD (mg/L) | 1989 | 51 |
| Ammoniacal nitrogen (mg/L) | 1326.6 | 67.4 |
| Total cadmium (mg/L) | 0.001 | 0.0003 |
| Chloroform (mg/L) | 0.012 | 0.0053 |
| Sulfide (mg/L) | 0.2 | 0.1 |

In the first two related parameters, a reduction of approximately 3 (three) times in the value of vegetable oils and animal fats, and more than 45 (forty-five) times in the value of total phenols, is observed with the application of POCS.

The results for BOD and ammonia nitrogen are even more positive, as a 39-fold reduction in BOD and approximately a 20-fold reduction in ammonia nitrogen were achieved after treatment. Finally, three more important results stand out: the parameters of total cadmium, sulfide, and chloroform, which showed significant and noticeable reductions. Total cadmium concentration was reduced more than 3 times; sulfide concentration was reduced more than double; and chloroform concentration was also reduced more than double.

## Claims

1. BIOCIDAL COMPOSITION, **characterized by** comprising:
a) chlorine dioxide;
b) silicon dioxide nanoparticles; and
c) stabilizer.

2. COMPOSITION, according to claim 1, **characterized by** being obtained by blending:
- a reagent (component A) comprising an organomineral compound reactive with hydrogen salts, hydroxy salts and a hydrated salt;
- a stabilizer (component B) comprising an acid complex with polynuclear coordination compounds, with two electron pairs and trisodium citrate; and
- cationic catalyst (component C) comprising a kinetic activated complex of chlorine dioxide in a colloidal solution of silicon dioxide.

3. COMPOSITION, according to claim 2, **characterized by** further comprising silicon dioxide nanoparticles (component D).

4. COMPOSITION, according to any one of claims 1 to 3, **characterized by** the silicon dioxide nanoparticle exhibiting only positive polarity.

5. COMPOSITION, according to any one of claims 1 to 4, **characterized by** the nanoparticles having a particle size ranging from 1 to 20 nm.

6. COMPOSITION, according to any one of claims 2 to 5, **characterized by** the components having the following ratios:
- 65 to 75%, by weight, of the reagent, in relation to the total weight of the composition;
- 15 to 25%, by weight, of the stabilizer, in relation to the total weight of the composition;
- 10 to 15%, by weight, of the cationic catalyst, relative to the total weight of the composition; and
- optionally, 1 to 2% by weight of silicon dioxide nanoparticles, relative to the total weight of the composition.

7. KIT, **characterized by** comprising:
- a reagent (component A) comprising an organomineral compound reactive with hydrogen salts, hydroxy salts and a hydrated salt;
- a stabilizer (component B) comprising an acid complex with polynuclear coordination compounds, with two electron pairs and trisodium citrate; and
- cationic catalyst (component C) comprising a kinetic activated complex of chlorine dioxide in a colloidal solution of silicon dioxide.

8. PROCESS FOR PRODUCING THE COMPOSITION, as defined in any one of claims 1 to 6, **characterized by** comprising blending components A, B and C.

9. PROCESS, according to claim 8, **characterized by** the blending being carried out in an environment that is statically stabilized by induction.

10. PROCESS, according to any one of claims 8 to 9, **characterized by** comprising, prior to blending, a weighing step of components A, B and C.

11. PROCESS, according to any one of claims 8 to 10, **characterized by** further comprising packaging the composition in a statically stabilized packaging, with positive polarity only.

12. PROCESS, according to any one of claims 8 to 11, **characterized by**, prior to blending, the process comprising a processing and nanoparticle size reduction step of the raw material of composition C in a statically stabilized environment, with positive polarity only.

13. PACKAGED PRODUCT, **characterized by** comprising a stabilized outer casing, so as to organize the ambient polarity of the ions of the packaging that stores the composition, as defined in any one of claims 1 to 6.

14. USE OF THE COMPOSITION, as defined in any one of claims 1 to 6, or of the kit, as defined in claim 7, **characterized by** being for disinfection and/or oxidation.

15. USE, according to claim 14, **characterized by** being for sewage treatment, effluent treatment, drinking water treatment, wastewater treatment, waste treatment, odor treatment, water source regeneration, surface disinfection, sanitization of fresh produce, sanitization of air conditioning systems, environmental sanitization, and hand sanitization.
